Europäisches Patentamt

European Patent Office

Office européen des brevets

Publication number: **0 279 148**

**A2**

# EUROPEAN PATENT APPLICATION

Application number: **87830456.7**

Int. Cl.⁴ **C02F 1/42**

Date of filing: **22.12.87**

The title of the invention has been amended (Guidelines for Examination in the EPO, A-III, 7.3).

Priority: **20.01.87 IT 850187 U**

Date of publication of application:
**24.08.88 Bulletin 88/34**

Designated Contracting States:
**CH DE ES FR GB IT LI SE**

Applicant: **Del Matto, Giuseppe**
**Via Alberto Mario no I/A Cap**
**I-86097 Pescolanciano (Isernia)(IT)**

Applicant: **Fracasso, Eduardo**
**Via dei Sanniti no. 16 Cap**
**I-86021 Boiano (Campobasso)(IT)**

Inventor: **Del Matto, Giuseppe**
**Via Alberto Mario no I/A Cap**
**I-86097 Pescolanciano (Isernia)(IT)**
Inventor: **Fracasso, Eduardo**
**Via dei Sanniti no. 16 Cap**
**I-86021 Boiano (Campobasso)(IT)**

## Water softening method.

The new proceeding utilized by the washing - machine and obtained by the elimination of the Mg and Ca off the water to undo the harmful reactions on the tensioactives of the detersives.

An appliance to realize the proceeding is called " PANDA WATER ".

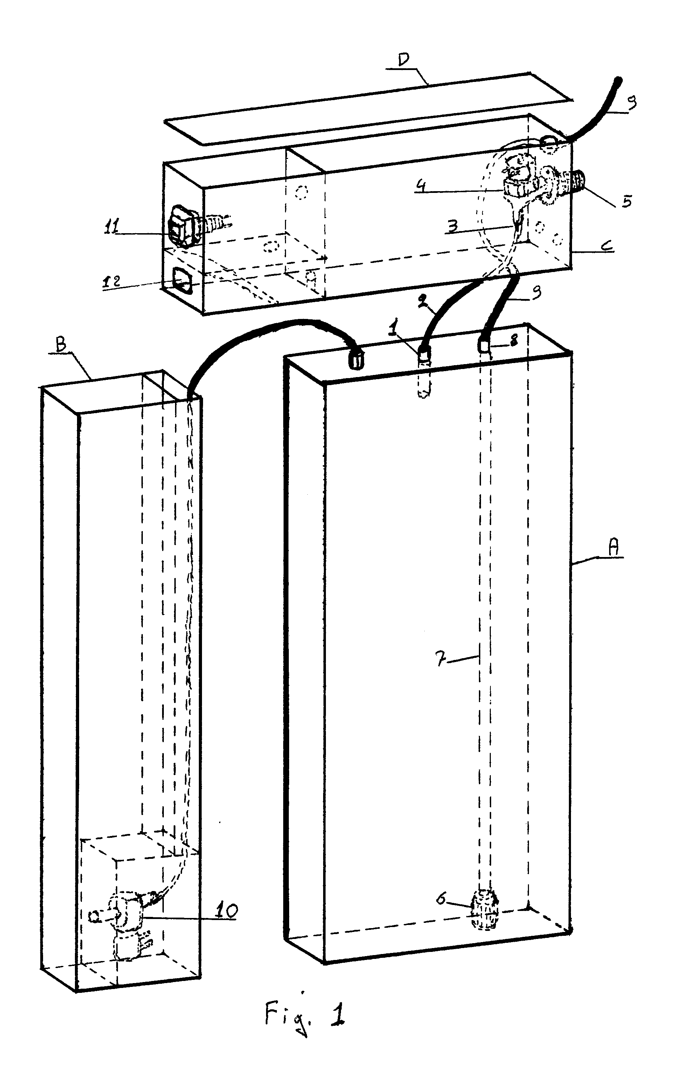

The PANDA WATER is composed of the following parts represented in figure 1:
A container of the resins ( A );
A container of NaCl solution ( B );
A container ( C );
An electric - valve ( 4 );
A microelectricpump ( 10 );
An hidraulic - circuit ( 6 ),( 7 ),( 8 ),( 9 ),where the water slows deprived of Mg and Ca.

Fig. 1

## New proceeding suitable to undo, the harmful effects of Mg and Ca in the cleansing work of water and detersive, obtained by an appliance called "PANDA WATER".-

The invention consists a new proceeding suitable to undo, the harmful effects of Mg and Ca in the cleansing work of water and detersive, obtained by an appliance called "PANDA WATER".-

The new proceeding can be profitably applied in the washing of the clots by the wash-cicles of the washing-machine.-

The new proceeding eliminates the Mg and Ca using cationic or anionic resins in the water before it is used in the cleansing.-

The jonic exchange is illustrated by the following example:

$2RNa + B^+ \rightarrow R2B + 2Na^+$, where B is Mg and Ca and R for cationic or anionic resins, in this example we uses "sour cationic resins".-

The ionic exchange system conceived as appliances to realize the execution of this new proceeding concern the present invention.-

We describe shortly how the water and detersive work on the dirty of the clothes.-

The dirty particles adhere to the fibres of the clothes thruogh a protective pellicles of grease.-

The combined work of the water and detersive diminishes the surface - tension of the water and grease - pellicle, and emulsionizes the grease, so that the dirty particles can absorb the water and be dissolved.-

The cleansing work in detersive powder is developed by the tensioctives (they are compound with soap, anionic tensioactives and not jonic tensioactives); but however these tensioactives, because of the presence of Mg and Ca in the water, alter their detergent property because they react on Mg and Ca.-

Actually, in the compound of detersives are added the tripoliphosfates or the Sasil or the Nata in low percentage, so that they take the place of the tensioactives in the reaction on Mg and Ca, and the tensioactives can freely work out their cleansing function.-

The concentration of Mg and Ca has several levels in the water, - in chemistry the levels of concentration are expressed in mg/liter or degress of the hardness of water - consequently the equivalence of quantities the tripoliphosfates necessary to the tensioactives to freely work out their celansing function is proportionate to the levels of the water - hardnes. Actually for the quantities of tripoliphosfates sufficient to react on the quantities of Mg and Ca present in the water, we use doses of detersive that increase as to much as the levels of hardnes.-

We relate below the doses of detersive necessary to the washing of 5 Kg of linen:

- Water with low level of hardness 10 gr.;
- Water with medium level of hardness 170 gr.;
- Water with medimu - hight level of hardness 240 gr.;
- Water with hight level of hardness 280 gr.;
- This data are supplied by the XOPPAS, doc. n° 119.-

The dose of detersive powder commonly used, necessary to clean 5 Kg of linen with the new proceeding is equivalent to 50 gr. for each level of water - hardness let in the washing - machine.-

Our laboratory - tests point out that this dose is equivalent to 50%, of that used in water with the lowest level of hardness.-

In conclusion we can say that this invention, so as it is characterised by the claims, offers the radical solution to the problems of Mg and Ca in the water, when we make use of detersive.-

This invention gives the chance to reduce the pollution caused by the detersives.-

This invention permits the industries to produce a detersive freed of the problems of the water - hardness.-

For this invention, it exists our request of a "Concessione di brevetto per modello di utilità n° 8501/B/87", with a different description, c/o the "Ufficio Centrale Brevetti - Via Molise n° 19 - 00187 ROMA-ITALIA".-

We illustrate, below, with designs an appliance called "PANDA WATER", to realise new proceeding, according to the following claims.-

The figure 1 shows the parts of the appliance in sections.-

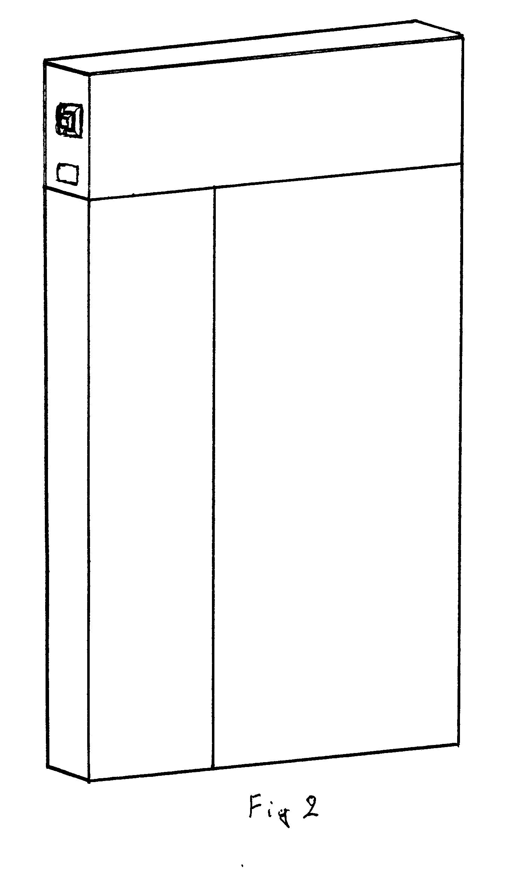

The figure 2 shows the appliance in a reduced scale by the rigth hand side.-

The appliance is composed of a container A, of a container B, of a container C and of a cover D.-

The container A has an hermetic closing on the top hand - side there is the connection 1 for the letting in of the water.-

In the container A there are about 8 liters of cationic resins, these can be regenerated through a concentrated solution of NaCl.-

The connection 1, through the little - pipe 2, joins the outlet 3 of the electric - valve 4.-

The entrance 5 of the electric - valve 4 joins a cold water tap with a 3/4 gas.-

The electric - valve 4 is electrically put in action through the programme of the washing - machine when the washing - machine supplies the water. The water enters in the container A and rapidly crosses the cationic resins and goes out deprived of Mg and Ca.-

The water thruogh the filter 6 and pipe 7 and the connection 8 and pipe 9, enters into the detergent - dispenser of the washing - machine to wash according to the new proceeding.-

The rapid crossing in "percolazione" of the water immediately causes the jonic exchange with the resins according to the reaction scheme:

$2RNa + B^+ \rightarrow R2B + 2Na^+$.-

The container B, opened on the top - side, has a capacity of about 4 liter of concentrated solution of NaCl, the refill of this solution is periodical.

The cationic resins of the container A, are regenerated through the solution of NaCl of the container B according to the reaction scheme:

$R2B + 2NaCl \rightarrow 2RNa + BC12$.-

A good system to keep always active the resins is realized with the letting in of a small of solution NaCl from the container B to the container A.-

This operation occurs after the wash - cicles through the microelectropump 10 put into action for few seconds.-

After this operation we need 12 hours before using the washing - machine again.-

The button 11 puts in to action the microelectropump 10, whose electricircuit is placed into the container C.-

The refill of the NaCl solution into container B is realized through the hole 12.-

To equipe every type of wshing - machine with the "PANDA WATER"" we need these operations:

- We must disconnect the inlet hose from the electric - valve of the washing - machine and connect it to the electric - valve 4;
- After we must remove the pipe connected to the detersive - dispenser and connect to it the pipe 9;
- Then we must disconnect the electric cables, that put into action the electric - valve of the washing - machine and, connect them to the electric - valve 4.-

At last we illustrate the reactions of the exchanges ($2RNa + B^+ \xrightarrow{\hspace{1cm}} R2B + 2Na^+$) between the salts of Mg and Ca and sour resins cationic:

$2RNa + Mg(HCO_2)2 \rightarrow R2Mg + 2NaHCO_2$;
$2RNa + MgSO_4 \rightarrow R2Mg + Na2SO_4$ ;
$2RNa + MgCl_2 \rightarrow R2Mg + 2NaCl$ ;
$2RNa + Ca(HCO_2)2 \rightarrow R2Ca + 2NaHCO_2$;
$2RNa + CaSO_4 \rightarrow R2Ca + 2Na2SO_4$;
$2RNa + CaCl_2 \rightarrow R2Ca + 2NaCl$.-

In the water freed Mg and Ca we will have neuter and alkaline salts of Na which don't prejudice the cleansing of water and detersive.

For the regeneration of resins the reactions of exchange is :

$R2B + 2NaCl \rightarrow 2RNa + BCl_2$.

Where B is Mg and Ca which,when the regeneration is completed,are eliminated as chlorides in the first wash - cicle of washing - machine, which don't prejudice the cleansing of water and detersive.

## Claims

1.New proceeding suitable to undo,the harmful effects of Mg and Ca in the cleansing work of water and detersive,obtained by an appliance called "PANDA WATER".

2.New proceeding that eliminates the chemical elements ( Mg and Ca ) off the water before using it.

3.New proceeding characterized by the elimination of Mg and Ca off the water,before letting the water into the basin of the washing - machine.

4.New proceeding characterized by the elimination of Mg and Ca off the water through the chemical reaction of the jonic exchange using cationic or anionic resins.

5.New proceeding characterized by the use fit for every wash - cicles of each washing - machine to wash clothes.

6.New proceeding characterized by the possibility to use equal doses of detersive for different degrees of hardness of water let in the washing - machine.

Fig. 1

Fig 2